Europäisches Patentamt

European Patent Office

Office européen des brevets

(19)

(11) Veröffentlichungsnummer: **0 120 353**
**A2**

(12) # EUROPÄISCHE PATENTANMELDUNG

(21) Anmeldenummer: **84102341.9**

(22) Anmeldetag: **05.03.84**

(51) Int. Cl.³: **B 65 D 51/00**

(30) Priorität: **14.03.83 US 475689**

(43) Veröffentlichungstag der Anmeldung:
**03.10.84 Patentblatt 84/40**

(84) Benannte Vertragsstaaten:
**AT BE CH DE FR GB IT LI LU NL SE**

(71) Anmelder: **Pharma-Metall GmbH**
**Eifelstrasse 63**
**D-5190 Stolberg(DE)**

(72) Erfinder: **Connor, John Thomas**
**16, Koch-Drive**
**Schwenksville PA 19473(US)**

(72) Erfinder: **Conard, William Albert**
**600 Glen Valley**
**Norristown Pennsylvania(US)**

(72) Erfinder: **Heistand, David Harold**
**East Cedarville Rd.**
**Pottstown Pennsylvania(US)**

(74) Vertreter: **Patentanwälte Dipl.-Ing. Hans Schmitt**
**Dipl.-Ing. Wolfgang Maucher**
**Dreikönigstrasse 13**
**D-7800 Freiburg i.Br.(DE)**

(54) Verschluss für einen Behälter, insbesondere für pharmazeutische Flaschen od. dgl. sowie Verfahren zum Herstellen eines Verschlusses.

(57) Ein Verschluß zum Halten eines Stopfens in einem Behälter weist eine becherartige Kapsel aus Metall auf, von der zumindest ein Teil mit einem verbundfähigen Material beschichtet ist und wobei dieses Teil von der Kapsel abtrennbar ist und insbesondere zur Betätigung mit einem Deckelteil verbunden ist. Mittels diesem Deckelteil kann der abtrennbare Teil von der Kapsel abgenommen und getrennt werden.

Fig.9

ATENTANWÄLTE

L.-ING. H. SCHMITT

.-ING. W. MAUCHER

78 FREIBURG i. BR. -2. März 1984
DREIKÖNIGSTR. 13
TELEFON: (0761)0120353
70774

Firma
Pharma-Metall GmbH
Eifelstraße 63
5190 Stolberg

UNSERE AKTE · BITTE STETS ANGEBEN:

E 84 178 S

Verschluß für einen Behälter, insbesondere für pharmazeutische Flaschen od. dgl. sowie Verfahren zum Herstellen eines Verschlusses

Die Erfindung betrifft einen Verschluß für einen Behälter, insbesondere für pharmazeutische Flaschen od. dgl.,
wobei der Behälter eine Öffnung, insbesondere mit einer
seitlichen Randwulst sowie einen Stopfen od. dgl. mit
auf der Öffnung aufliegendem Flansch zum Verschließen
der Behälteröffnung aufweist und mit einer den Stopfen
od. dgl. zumindest bereichsweise umschließenden, becherartigen Überwurfkapsel.
Kappenartige Verschlüsse für übliche Ausführungen von
pharmazeutischen Behältern weisen gewöhnlich ein durchstechbares Verschlußteil, wie z. B. eine Scheibe oder
einen Stopfen aus Gummi auf, der in der Ablauföffnung
des Behälters sitzt und normalerweise durch eine Außenkapsel gehalten wird, die den Stopfen durch Umbördelung
eines Ansatzes am Flaschenhals festhält. Diese Metall-
überwurfkapseln können einen abnehmbaren Deckelteil aufweisen, der an einem mittleren abnehmbaren Scheibenteil
der Metallkapsel verbunden ist. Dieser Deckelteil kann
vom Benutzer abgehoben oder abgedreht werden, wodurch
der Brückenteil, der die Mittelscheibe mit dem Außenteil
der Metall-Überwurfkappe verbindet, bricht und somit den

S/Gu/H                                                    /2

elastischen, durchstechbaren Stopfen freigibt, so daß der Behälterinhalt entnommen werden kann, indem der Stopfen mit einer subkutanen Spritze durchstochen wird. Es ist beispielsweise bekannt durch das Ravn-Patent Nr. 3 071 274, daß das äußere Plastik-Deckelelement in der Mitte ein vorstehendes Teil hat, das durch eine Öffnung in den abnehmbaren Scheibenbereich der Überwurfkappe eingreift, um diese festzuhalten. Wenn das Deckelelement vom Benutzer mit dem Daumen angehoben wird, löst sich die Scheibe, die mit der Außenkappe durch trennbare Brücken verbunden ist, so daß eine kreisförmige Fläche des in der Ablauföffnung des Behälters sitzenden Stopfens freigelegt ist. Obwohl sich dieser Verschluß im wesentlichen bewährt hat, sind noch einige Nachteile vorhanden. Es hat sich z. B. herausgestellt, daß die beim Entfernen des mittleren Scheibenteiles hervorgerufenen zackigen Kanten ein gewisses Verletzungsrisiko mit sich bringen, wenn sie von der Hand des Benutzers berührt werden. Darüber hinaus kann die zum Entfernen der Scheibe notwendige Kraft je nach der jeweiligen Umfangsgröße unterschiedlich sein. Somit kann die Kraft zum Öffnen des Verschlusses von der einen zur anderen Kapsel variieren, obwohl alle entsprechend den gleichen Normtoleranzen gefertigt sind.

Weiterhin sind Verschlüsse bekannt, bei denen das Deckelelement an einer abnehmbaren Scheibe der Metall-Überwurfkapsel befestigt ist. Im Anderson-Patent Nr. 3 358 865 ist z. B. der mittlere abnehmbare Teil der Scheibe ebenfalls mit dem Außenteil der Metallkappe durch im Umfang unterteilte, zertrennbare Brücken verbunden. Hierbei hat jedoch das zentrale Scheibenteil einen vorstehenden Kopf, der durch eine mittlere Öffnung in die Kapsel eingreift und zur Befestigung verstemmt ist. Die Nachteile sind hier etwa vergleichbar mit denen der Ravn-Kapsel, wobei sie etwas teurer in der Herstel-

lung und Montage ist.

Das Labarge-Patent Nr. 3 369 692 zeigt eine ähnliche Anordnung wie das Anderson-Patent Nr. 3 358 865. Jedoch ist hierbei die Überwurfkapsel aus Metall und der Hals des Kopfes ist nicht kreisförmig, so daß der Kopf und die Scheibe durch Drehen des Deckelelementes entfernt werden können.

Die Patentschrift Nr. 3 547 297 (Herbert) zeigt wieder eine ähnliche Verschlußmontur wie vorbeschrieben. Hierbei ist jedoch der Scheibenteil mit dem Außenteil der Metall-Überwurfkapsel durch teilweise Kerben verbunden. Das Deckelelement ist jedoch mit dem abnehmbaren Scheibenteil in ähnlicher Weise verbunden wie in dem Patent Nr. 3 071 274 beschrieben. Zwar ist dieser Verschluß ebenfalls gut einsetzbar, ist jedoch in der Herstellung und Montage teuer. Darüber hinaus bildet die Öffnung in der Metallkapsel zur Aufnahme des vorstehenden Teils des Plastik-Deckelelementes einen Zutritt zum Eindringen von Fremdkörpern, wodurch eine Verschmutzungsgefahr des Stopfens gegeben ist. Dies bedeutet, daß zwar die teilweise angebrachten Kerben einen möglichen Weg für Verunreinigungen, wie z. B. Bakterien u. dgl. ausschließen, daß aber die Öffnung zum Anpassen des Deckelelementes einen anderen Weg ergibt, so daß der gesamte Verschluß keine völlig hermetische Dichtung bildet.

Die Patentschrift Anderson Nr. 3 379 326 zeigt eine Reihe von Ausführungsformen, bei denen das Deckelelement Stützen bzw. Stützfüße oder einen durchgehenden Rand hat, der unter der mittleren Öffnung in die Metallkapsel eingreift und der bzw. die brechen, wenn das Deckelelement von der Metallkapsel abgehoben wird, um den Stopfen freizulegen. Während bei dieser Ausführungsform keine zackigen Kanten beim Brechen der Metallbrücken entstehen, die den mittleren Scheibenteil mit der Außenkapsel verbinden, hat sich herausgestellt, daß diese Kapselausbil-

/4

dung teuer in der Herstellung und Montage ist und daß bei einigen Ausführungsformen die Kraft zum Entfernen nicht gleichmäßig an allen Eingriffsstellen des Deckelelementes ist. Außerdem ist nachteilig, daß der gesamte Verschluß, bestehend aus Metallkappe und Deckelelement, keine völlige hermetische Abdichtung ergibt. Weitere Ausführungsformen von Verschlüssen sind in den US-Patenten Nr. 3 193 128, 3 446 170, 3 587 897 aufgeführt.

Aufgabe der vorliegenden Erfindung ist es, einen Verschluß der eingangs erwähnten Art zu schaffen, der einerseits eine hermetische Abdichtung bildet und einfach herstell- und montierbar ist. Darüber hinaus soll die notwendige Trennkraft beim Öffnen des Verschlusses, um einen Teil des Stopfens freizulegen, gleichmäßig sein. Auch soll die Herstellung wirtschaftlicher sein.
Zur Lösung dieser Aufgabe wird erfindungsgemäß insbesondere vorgeschlagen, daß ein Teil der Überwurfkapsel von dieser trennbar ausgebildet ist und daß ein Deckelteil od. dgl. mit dem abtrennbaren Teil der Überwurfkapsel verbunden und mit diesem entfernbar ist. Ein solcher Verschluß ist einfach in der Herstellung und Montage und läßt sich insbesondere auch einfach handhaben, wobei eine gute Gleichmäßigkeit der Abrißkraft des mit dem Deckelteil zu entfernenden Teiles der Überwurfkapsel gegeben ist.
Zweckmäßigerweise ist zur Verbindung des abtrennbaren Kapselteiles und des Deckelteiles eine Zwischenschicht im Verbindungsbereich vorgesehen, die vorzugsweise aus Polypropylen od. dgl. verbundfähigem Material besteht und eine Dicke zwischen etwa 0,1 mm bis 1 mm hat. Vorzugsweise besteht dabei die Überwurfkapsel aus Metall, insbesondere Aluminiumblech und weist zumindest im Bereich des abtrennbaren Teiles eine Außenbeschichtung aus Kunststoff od. dgl. zum Verbinden mit dem Deckelteil auf.

Die Außenfläche der Überwurfkapsel kann dabei mit einem dünnen Kunststoff-Film aus Polypropylen überzogen sein oder es kann eine Lackbeschichtung auf Polypropylenbasis vorgesehen sein. In Fällen, wo die Metall-Überwurfkapsel mit einem dünnen Kunststoff-Film oder einer Kunststoff-Beschichtung überzogen ist, weist diese Beschichtung vorzugsweise eine Dicke von etwa 1 mm auf und bei einer Beschichtung mit einem Lackfilm auf Kunststoffbasis hat dieser Film vorzugsweise eine Dicke von 0,1 mm.

Das Deckelteil besteht vorzugsweise aus Kunststoff und ein Teil dieses Deckels ist z. B. thermisch oder mittels Ultraschall mit dem abtrennbaren Kapselteil verbunden. Dieses Deckelteil kann einfach mit dem Daumen abgehoben werden, wobei der damit verbundene Teil der Überwurfkapsel mit von dieser getrennt wird.

Die Erfindung betrifft auch ein Verfahren zur Herstellung eines erfindungsgemäßen Verschlusses. Dieses Verfahren ist insbesondere dadurch gekennzeichnet, daß eine Lage eines verbundfähigen Materials auf die Außenseite der Kapsel, insbesondere auf den abtrennbaren Scheibenteil der Kapsel aufgebracht wird, daß dann ein Deckelteil auf den mit verbundfähigem Material versehenen Teil des Scheibenabschnittes der Kapsel aufgelegt und anschließend das Deckelteil und das Scheibenteil miteinander verbunden werden. Dieses Verfahren ist besonders einfach durchführbar.

Zusätzliche Ausgestaltungen der Erfindung sind in den weiteren Unteransprüchen aufgeführt. Nachstehend ist die Erfindung mit ihren wesentlichen Einzelheiten anhand der Zeichnung noch näher erläutert.

Es zeigt:

**0120353**

Fig. 1    eine Seitenansicht des Verschlusses vor dem Anbringen auf einem Behälter,

Fig. 2    eine Aufsicht des in Fig. 1 gezeigten Verschlusses,

Fig. 3    eine vergrößerte, perspektivische Ansicht eines
          getrennten Verschlusses mit Deckelteil und Über-
          wurfkapsel,

Fig. 4    einen Querschnitt einer noch getrennten Kapsel
          und eines Deckelteiles,

Fig. 5    eine Ausschnittsvergrößerung des in Fig. 4 durch
          einen Kreis gekennzeichneten Bereiches,

Fig. 6    einen Querschnitt eines Verschlusses bei montiertem Deckelteil,

Fig. 7    eine vergrößerte Detaildarstellung des in Fig. 6
          durch einen Kreis gekennzeichneten Bereiches,

Fig. 8    eine Schnittdarstellung des oberen Endes eines
          Behälters, z. B. einer Arzneiflasche mit Verschluß in Schließstellung,

Fig. 9    eine etwa Fig. 8 entsprechende Ansicht, hier jedoch bei teilweise entferntem Deckelteil,

Fig. 10
bis 13    Querschnitte abgewandelter Ausführungsformen
          von Verschlüssen und

Fig. 14
bis 17    schematische Darstellungen zur Herstellung eines erfindungsgemäßen Verschlusses.

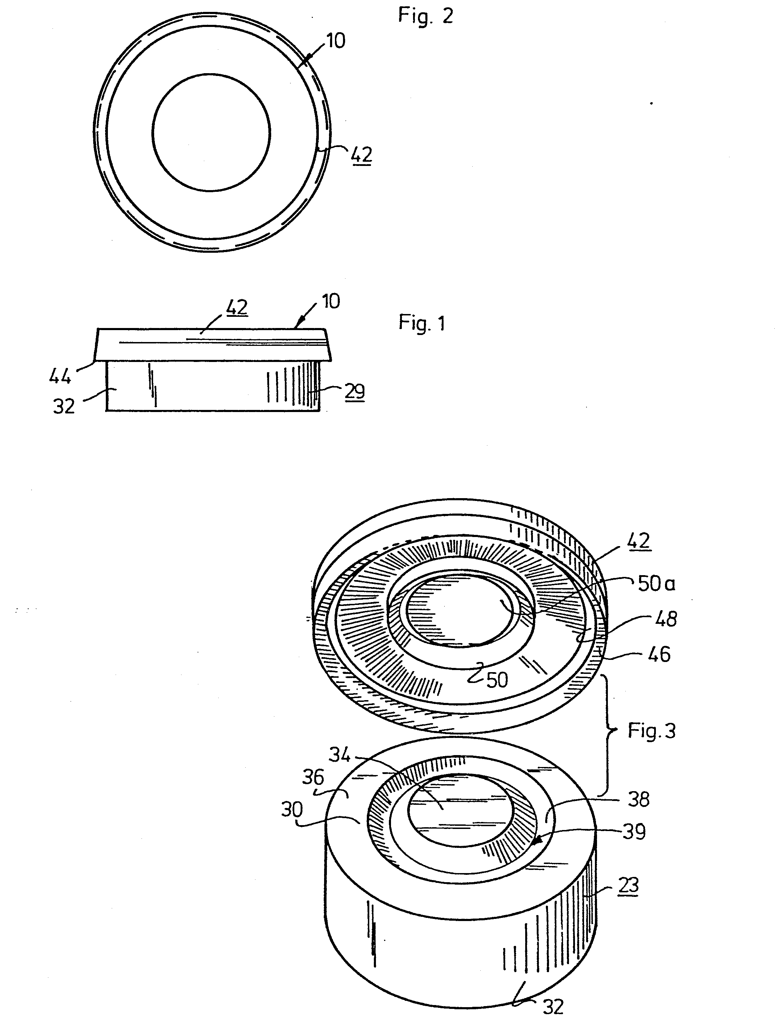

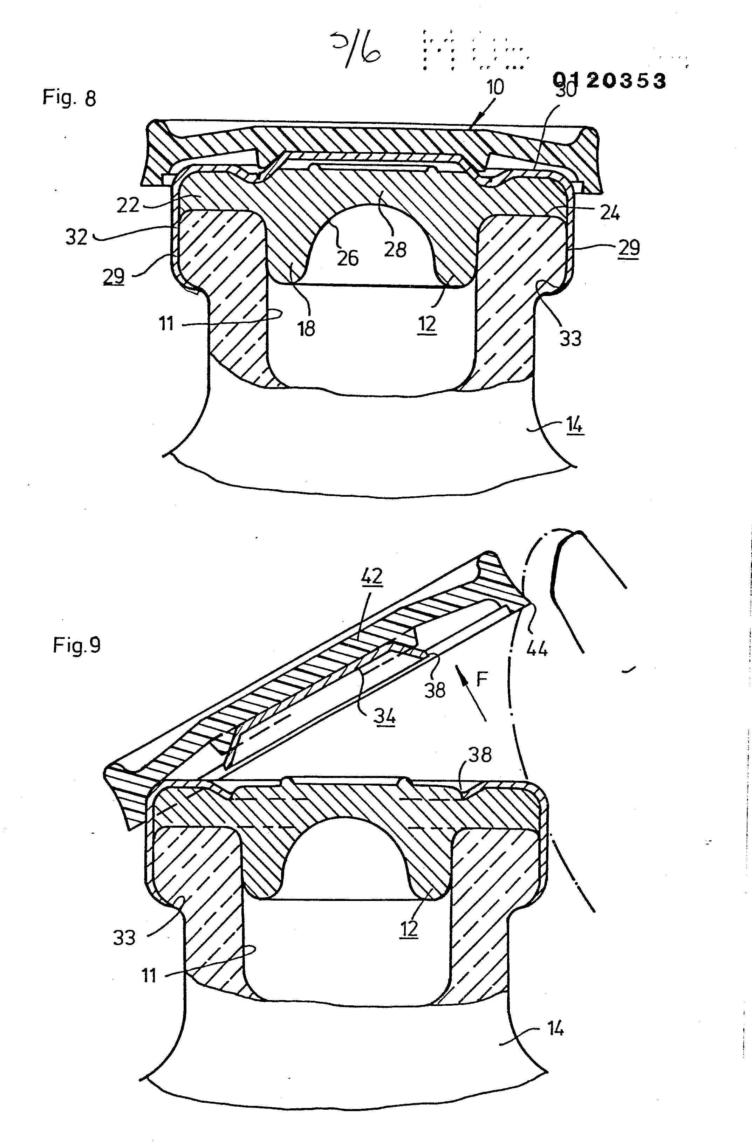

Ein insgesamt mit 10 bezeichneter Verschluß (z. B. Fig. 1 bis 9) weist zum Halten eines Stopfens 12 in eine Auslauföffnung 11 eines Behälters, z. B. einer in Fig. 8 und 9 gezeigten Flasche 14, eine Überwurfkapsel 29 auf. Der Stopfen 12 hat in üblicher Weise einen mit einer Innenhöhlung 26 versehenen Stopfenteil 18, der dicht in die Öffnung 11 der Flasche paßt, sowie einen oberen Oberteil 22, der die Mündung 24 der Flasche bedeckt und gegen diese Mündung 24 aufliegt. Der Stopfenteil 18 weist innen die Innenhöhlung 26 auf, um im Mittelbereich einen dünnwandigen Abschnitt 28 zu haben, der z. B. mit der Nadel einer subkutanen Spritze durchstochen werden kann, um zu dem Flascheninhalt zu gelangen. Der Stopfen 12 kann eine beliebige, übliche Form haben; die vorliegende Erfindung betrifft nicht die besondere Ausführung des Stopfens.

Die Überwurfkapsel 29, die den Stopfen 12 festhält, besteht vorzugsweise aus Blech, z. B. aus Aluminiumblech und ist becherartig mit einem Oberteil 30 und einem seitlichen Mantel ausgebildet, wobei der Unterrand des Mantels 32 unter dem Mündungswulst 33 der Flasche 14 eingebördelt wird, um die Überwurfkapsel 29 und den Stopfen 12 festzuhalten. Im vorliegenden Beispiel weist das Oberteil 30 einen etwas vorstehenden, schalenförmigen, mittleren Scheibenteil 34 auf, der mit einem ringförmigen Außenteil 36 des Oberteiles 30 über eine etwas eingesenkte, kreisförmige Einziehung 38 verbunden ist. Das mittlere Scheibenteil 34 ist abnehmbar bzw. trennbar mit dem ringförmigen Außenteil 36 verbunden und im vorliegenden Fall durch eine durchgehende, kreisförmige Einkerbung 39, die in der Außenfläche 40 der Einziehung 38 gebildet, und eine kreisförmige Sollbruchzone bestimmt, in der die Überwurfkapsel 29 eine geringere

Dicke $T_S$ hat. Die Verschlußanordnung beinhaltet weiterhin einen vorzugsweise aus einem Kunststoff-Material, wie Polypropylen, hergestellten Deckelteil 42, der mit dem mittleren Scheibenteil 34 verbunden ist. Wie in Fig. 9 dargestellt, kann dieses Scheibenteil an seiner Kante 44 der Außenseite mit dem Daumen angehoben werden, um den daran befestigten mittleren Scheibenteil 34 von der restlichen Kapsel entlang der Kerbe 39 abzutrennen, damit der Stopfen zur Entnahme des Flascheninhaltes mittels einer Spritze freigelegt ist.

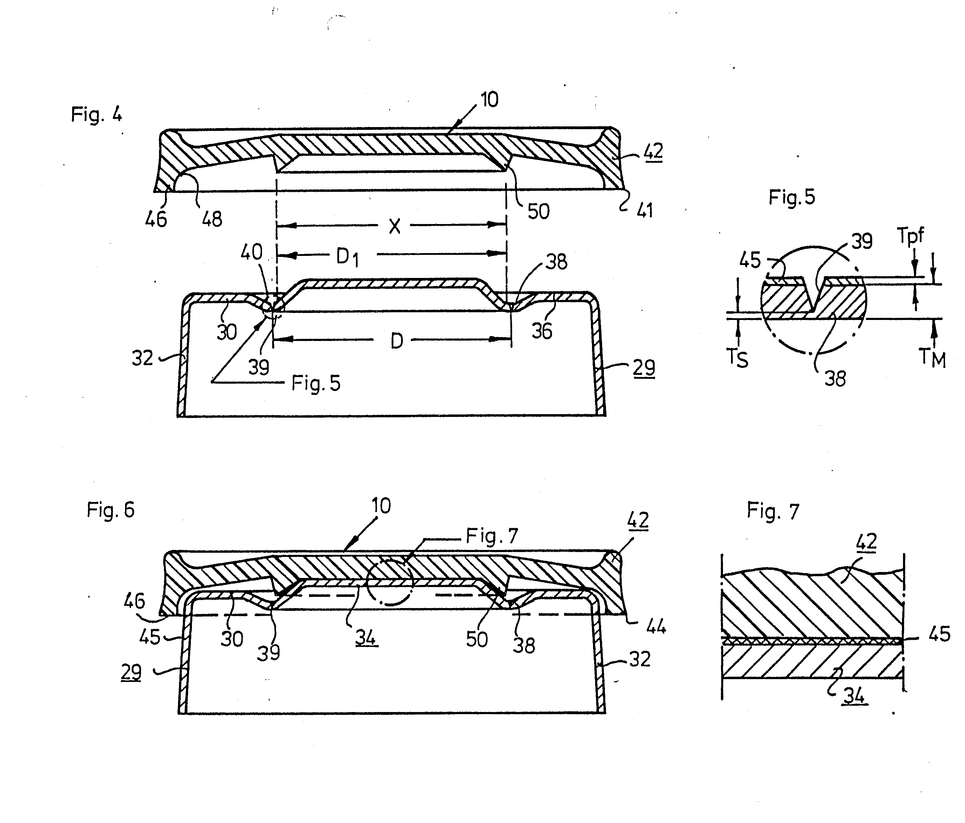

Entsprechend der vorliegenden Erfindung ist der Deckelteil 42 an dem abnehmbaren Scheibenteil 34 der Überwurfkapsel derart befestigt, daß eine hermetische Abdichtung des Verschlusses vorhanden ist, wobei die Kapsel 29 den Stopfen festhält und insgesamt eine Anordnung bildet, die einfach und wirtschaftlich herzustellen ist. Zu diesem Zweck ist die Außenfläche der Überwurfkapsel 29 mit einer dünnen Materialschicht 45 von vorbestimmter Stärke $T_{pp}$ zumindest im Bereich des hochstehenden, abnehmbaren Scheibenteiles 34 versehen, die mit der Außenfläche der Überwurfkapsel durch Mittel, wie z. B. Hitze oder die Verwendung eines Klebemittels verbunden ist und die mit dem Deckelteil 42 durch Anwendung von Hitze und/oder Druck verbunden ist. Es hat sich herausgestellt, daß eine Schicht Polypropylen für diesen Zweck geeignet ist. Der Deckelteil, wie in Fig. 4 dargestellt, hat eine scheibenähnliche Form mit einem kurzen, etwa radial gerichteten Flansch 46 an der äußeren Umfangskante des Oberzeiles, wobei innenseitig ein abgerundeter, innerer Übergang 48 vorgesehen ist zur Anpassung an den oberen Rand der Überwurfkapsel. Der Deckelteil 42 weist ebenfalls einen kreisförmigen, vorstehenden Flansch 50 auf, der einen Hohlraum 50 a umgrenzt, der der Kontur des vorstehenden Scheibenteiles 34 des Oberteiles der Überwurfkapsel angepaßt ist. Durch diese Ausbildung ist eine große, mit x bezeichnete Verbindungsfläche zwischen dem Deckelteil 42 und dem mit Polypropylen beschichteten Abschnitt der Überwurfkapsel innerhalb der von der Einkerbung 39 bestimmten Grenze gebildet. Diese Verbindung kann mittels Hitzeanwendung oder Ultraschall-Schweißen erzielt werden. Die große Verbindungsfläche zwischen dem Deckelteil 42 und dem Scheibenteil 34 der Überwurfkapsel ergibt eine hohe Verbindungsfestigkeit, um das Abreißen des Scheibenteiles 34 der Überwurfkapsel längs der teilweisen Einkerbung 39 bei Betätigung durch Drehung oder Abheben des Deckelteiles weg von der Kappe, wie in Fig. 9 dargestellt, zu gewährleisten. Der Durchmesser D der Einkerbung 39 ist insbesondere geringer als $D_1$ der Verbindungsfläche x. Die Verbindungsfläche zwischen dem Deckel und der Überwurfkapsel kann je nach vorhandener Kapselgröße wahlweise geändert werden und die Tiefe der Einkerbung kann ebenfalls geändert werden, so daß die Abziehkraft innerhalb eines vorbestimmten Bereiches angepaßt werden kann. Jedoch ist die Bindung zwischen dem Deckel 42 und Überwurfkapsel in allen Fällen größer als die Kraft zum Trennen an der durch die Einkerbung 39 gebildeten Sollbruchstelle, um das Entfernen des Scheibenteiles 34 von der Überwurfkapsel zu gewährleisten, wenn der Deckelteil 42 abgezogen wird. Die Tiefe der Einkerbung ist so bemessen, daß der Scheibenteil 34 der Kapsel bei der Handhabung nicht vorzeitig bricht; auf diese Weise übersteht er verschiedene Behandlungstechniken während des Herstellungsverfahrens und ist trotzdem relativ einfach zu entfernen, wenn er in Gebrauch genommen wird. In der vorbeschriebenen Ausführungsform sind der Deckel 42 und die Kapsel 29 praktisch selbstzentrierend aufgrund der ausgewölbten Struktur der Überwurfkapsel und des Hohlraumes 50 a, der im Deckelteil 42 durch den Flansch 50 umgrenzt ist, so daß der Deckel und die Kapsel einfach und genau in automatischen, schnell laufenden-

fenden Beschickungs- und Montageanlagen behandelt werden können.

Bei den folgenden Angaben handelt es sich um typische, bevorzugte Maßverhältnisse für einen 13 mm-Verschluß in Übereinstimmung mit der vorliegenden Erfindung:

D - Durchmesser der Einkerbung 39 - 0,0211 Zoll bzw. 5,36 mm

$D_1$ - Durchmesser der Verbindungsfläche X - 0,205 Zoll bzw. 5,207 mm

$T_M$ - Dicke der Überwurfkapsel 29 - 0,007 Zoll bzw. 0,178 mm

$T_S$ - Dicke der Überwurfkapsel im Bereich der Einkerbung 39 - 0,003 bis 0,004 Zoll bzw. 0,076 bis 0,1 mm

$T_{pp}$ - Dicke der Kunststoffschicht 45 - 1 mm

F - Abreißkraft gemessen an der Peripherie des Deckels 42 - ca. 3,4 lbs bzw. etwa 1,5 kgp.

Die vorgenannten Abmessungen und Verhältnisse können jeweils in Abhängigkeit von der Größe des Verschlusses wahlweise geändert werden.

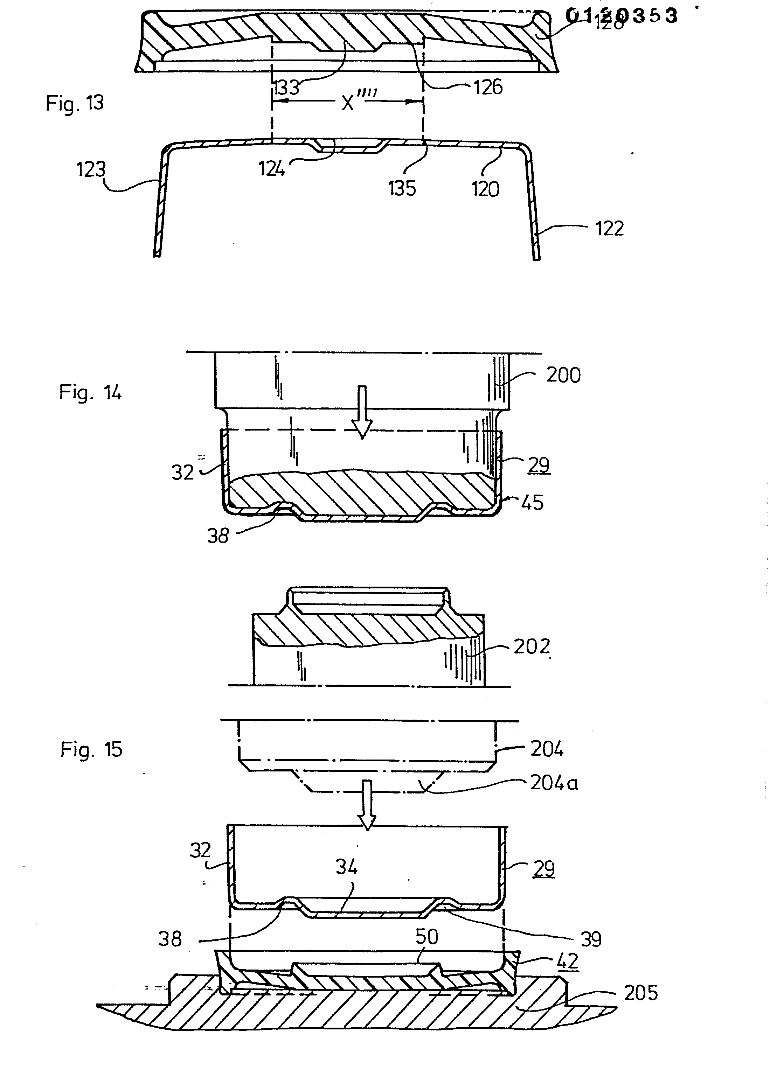

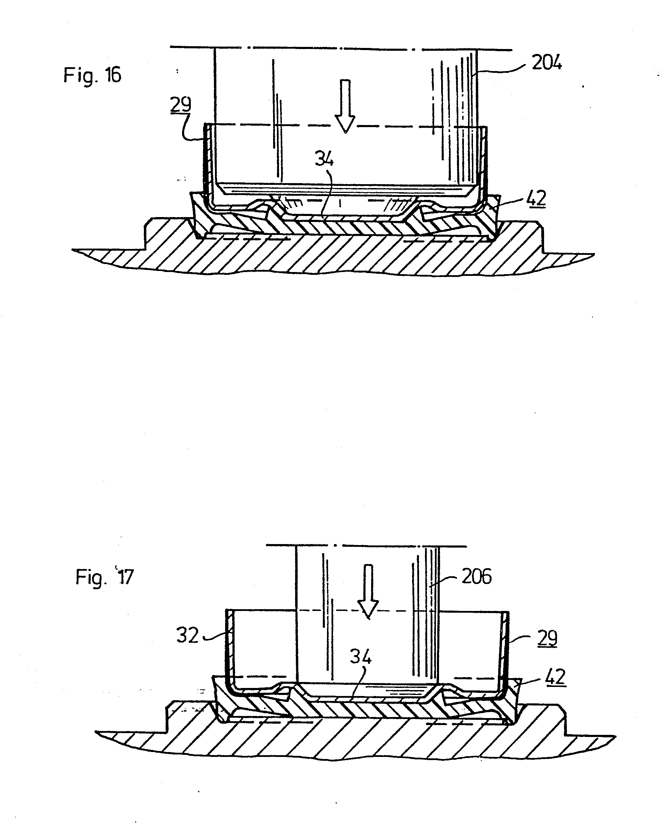

Die Verschlußanordnung gemäß der vorliegenden Erfindung ist einfach und wirtschaftlich herzustellen. Z. B. können kreisförmige Scheiben aus Polypropylen beschichtetem Aluminium aus Flachblech-Vorrat herausgeschnitten und in einem Formvorgang in die gewünschte Struktur der Kapsel geformt werden, wie z. B. in Fig. 4 dargestellt. Bezugnehmend auf Fig. 14 bis 17 wird danach die Einkerbung 39 in die geformte Kapsel geformt, indem sie z. B. in eine obere Formstanze 200 eingelegt wird, die sich gegen eine untere Rillenform oder Rillenkopf 202 mit einer Schneidekante 203 hin- und herbewegt. Die mit einer Einkerbung 39 versehene Kapsel ist dann fertig zum Anbringen an das Deckelteil 42, was mittels eines Heißverbindungsverfahrens, wie in Fig. 15 und 16 dargestellt, oder eines Ultraschallverbindungsverfahrens, wie in Fig. 17 dargestellt, durchgeführt werden kann. Wie in Fig. 15 gezeigt, wird das Deckelteil 42 in einem Zentrierteil 205 gehalten. Die Kapsel wird dann im Deckelteil in die entsprechende Lage gebracht. Ein Elektroheizelement 204, das einen ausgeformten Mittelteil 204 a entsprechend dem mitteleren, abtrennbaren Scheibenteil der Kapsel hat, wird dann, wie in Fig. 16 dargestellt, innen auf die Kapsel aufgesetzt, um unter Druck und Hitzeeinwirkung auf die mittlere Zone die gewünschte Bindungskraft zwischen dem Deckelteil und der äußeren Polypropylenschicht der Kapsel 29 zu erreichen. Es ist dabei zu beachten, daß der Teil des Deckelteiles, der radial außerhalb der Einkerbung liegt, von dem äußeren, ringförmigen Oberteil 30 der Überwurfkapsel 29 leicht abgehoben ist, um ein Anhaften des Deckelteiles an die Kapsel in diesem Bereich oder in dieser Zone zu verhindern. Der in Fig. 17 schematisch dargestellte Vorgang ist im wesentlichen derselbe, außer daß in diesem Beispiel ein Ultraschallkopf oder -werkzeug 206 eingesetzt wird, der bzw. das nur den abnehmbaren Scheibenteil heizt, um die gewünschte lokalisierte Haftung des Deckelteiles nur an dem Scheibenteil der Kapsel, der radial innen von der Einkerbung 39 liegt, zu bewirken. Der Verschluß ist dann fertig zum Anbringen auf einem gefüllten Behälter, indem er einfach über den Stopfen in die richtige Lage gebracht und die untere Kante unter den Mündungswulst 33 des Behälters oder der Flasche gebördelt wird.

Anstelle einer Polypropylenschicht 45, die mit der Aluminium-Überwurfkapsel verbunden wird, kann die Überwurfkapsel auch mit einem Polypropylen-Lack abgedeckt werden. Es ist natürlich auch möglich, die Metall-Überwurfkapsel mit anderen im Handel erhältlichen Aufschmelz-Klebstoffen zu beschichten.

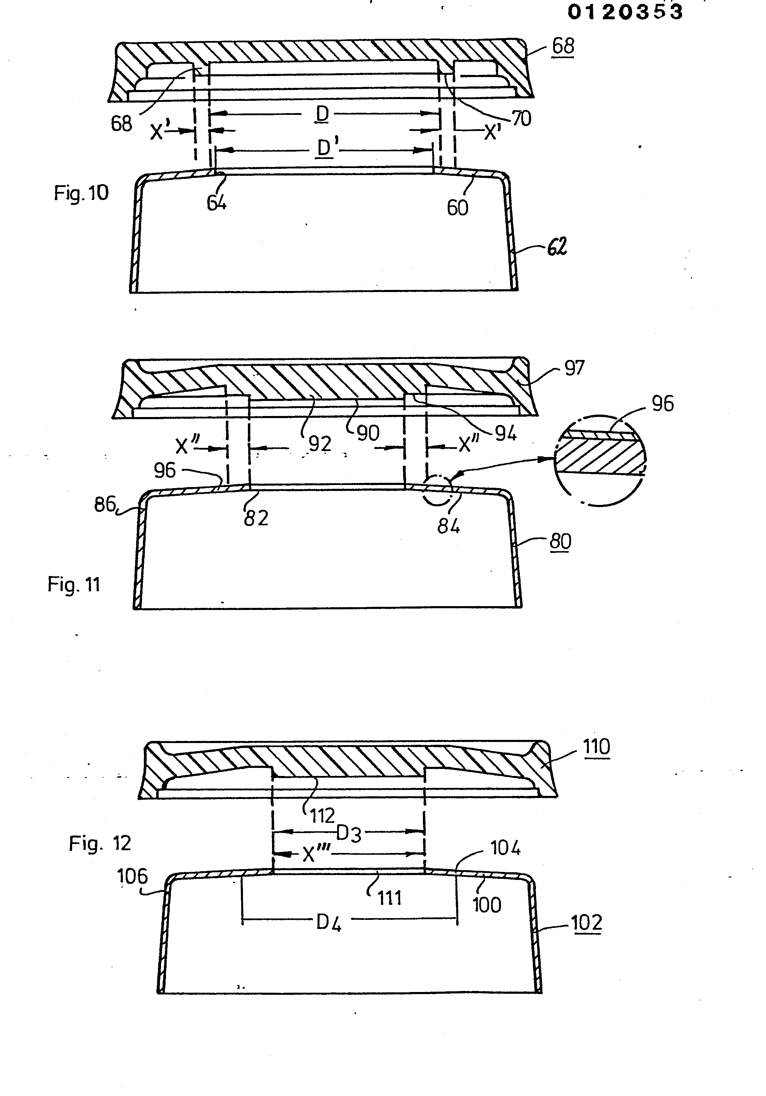

Andere Ausführungsarten von Verschlußanordnungen entsprechend der vorliegenden Erfindung sind in den Figuren 10 bis 13 dargestellt, und sie umfassen im wesentlichen die Hauptmerkmale der vorbeschriebenen Erfindung. In der Ausführungsform gemäß Fig. 10 ist das Oberteil 60 der kunststoffbeschichteten Überwurfkapsel 62 mit einer zentralen Öffnung 34 versehen, und der Deckelteil 66 hat einen kreisförmigen, vorstehenden Flansch 68, dessen innerer Durchmesser D größer ist als der Durchmesser D' der Öffnung 64 im oberen Bereich der Überwurfkapsel, wobei die innere Stirnfläche 70 des Flansches 68 flach ist und die Verbindungsfläche zur Überwurfkapsel bildet, wobei die Verbindung durch Anwendung von Hitze und Druck in etwa derselben Art, wie bereits vorbeschrieben, hergestellt wird. Gemäß dieser Anordnung wird die Verbindungsfläche X' durch die Breite der Fläche 70 des Flansches der Überwurfkapsel bestimmt. Diese Fläche X' kann vergleichsweise gering sein, um eine annehmbare Bedienkraft zu erhalten, wenn die Verbindung durch Abziehen des Deckelteiles 66 in der vorbeschriebenen Art und Weise getrennt wird, damit die Stopfenfläche 12 freigelegt wird, um mittels einer subkutanen Spritze zu dem Inhalt des Behälters zu gelangen. Auch diese Verschlußanordnung kann einfach und wirtschaftlich hergestellt werden. Die Verschlußanordnung hat auch alle Vorteile der vorbeschriebenen Hauptanwendungsart, wonach sie eine hermetische Abdichtung zwischen dem Verschluß und dem Stopfen herstellt und wirklich dicht ist aufgrund der Tatsache, daß, sobald die Verbindung zwischen dem Flansch 68 des Deckelteiles 66 und der Oberfläche des Überwurfkapsel-Oberteiles getrennt ist, diese nur durch Anwendung von Wärme und Druck wieder hergestellt werden könnte.

Gemäß der Ausführungsart der in Fig. 11 dargestellten Verschlußanordnung hat die polypropylenbeschichtete Überwurfkapsel 80, ähnlich wie die Ausführungsart in Fig. 10, eine kreisförmige Öffnung 82 im oberen Bereich 84. In diesem Bereich ist die äußere Kunststoff-Schicht 86 kreisförmig mit einer Rille 96 versehen, radial nach außen von der Öffnung abgesetzt im oberen Bereich der Überwurfkapsel 80. In diesem Beispiel hat der Deckelteil 97 einen axial vorstehenden, abgestuften Vorsprung 90 mit einem mittleren Stopfenteil 92, der dicht in die kreisförmige Öffnung 82 der Überwurfkapsel eingreift. Außerdem ist ein ringartiger, etwas zurückspringender Ansatz 94 außen neben dem mittleren, vorstehenden Stopfenteil 92 vorhanden, der mit der Überwurfkapsel durch Anwendung von Wärme und/oder Druck verbunden wird. In diesem Beispiel wird die Rille 96 nur in der Kunststoff-Schicht 86 gebildet und die Überwurfkapsel 80, die vorzugsweise aus Aluminium sein sollte, weist keine Einkerbung auf und hat im allgemeinen eine gleichmäßige Dicke. Es ist zu beachten, daß die Verbindungsfläche X'' innerhalb der Rille 96 in der Kunststoff-Schicht 86 der Überwurfkapsel liegt, so daß beim Abnehmen des Deckelteiles zum Trennen der Verbindung, das ringartige Kunststoffband säuberlich an der Rille 96 abbricht und an dem Deckelteil haftet. Hier - genau wie bei dem vorher beschriebenen Anwendungsbeispiel - kann die Dichtungsfläche X'' wahlweise je nach Größe der Verschlußanordnung geändert werden, so daß eine Verbindungskraft vorhanden ist, die den Deckelteil und die Überwurfkapsel ausreichend verbindet und größer ist als die Kraft, die zum Brechen der Kerbe 96 erforderlich ist. Das Eingreifen des Stopfenteiles 92 in die Öffnung erleichtert das ordnungsgemäße Ausrichten der Teile während des Verbindungsprozesses.

Fig. 12 zeigt eine Verschlußanordnung, die in der Arbeitsweise und Funktion ähnlich wie das Hauptanwendungsbeispiel ist. Jedoch ist in diesem Beispiel der obere Teil 100 der Überwurfkapsel 102 relativ flach und beinhaltet eine teilweise Kerblinie 104, die sich durch die

0120353

Kunststoff-Schicht 106 und teilweise in den oberen Aluminiumteil 100 erstreckt, um eine abnehmbare Scheibe 111 zu bestimmen. Der Deckelteil 110 hat einen mittleren Vorsprung 112 mit einem Durchmesser $D_3$, der geringer als der Durchmesser $D_4$ der Scheibe 111 ist, die durch die Kerbe 104 bestimmt wird. Über diesen mit X''' bezeichneten Bereich der Fläche des Vorsprunges wird das Deckelelement mit der Überwurfkapsel durch Anwendung von Wärme und Druck in der oben beschriebenen Art und Weise verbunden. In diesem Fall bricht durch Betätigung des Deckelteiles die Überwurfkapsel längs der Einkerbung, wobei die Verbindungskraft im Bereich X''', wo der Deckel mit der Schicht verbunden ist, größer ist als die Kraft, die erforderlich ist, um die Scheibe 111 längs der teilweise mit Rillen versehenen Kerblinie 104 zu brechen. Fig. 13 ist ähnlich wie das in Fig. 12 dargestellte Ausführungsbeispiel, außer daß hier der obere Teil 120 der Überwurfkapsel 122, die mit einer darin haftenden Kunststoff-Schicht 123 versehen ist, einen flachen, nach innen eingezogenen Bereich 124 hat, und daß der Vorsprung 126 an dem Deckelteil 128 einen dementsprechend geformten, komplementären Führungsteil 130 hat, der in dem abgerundeten Hohlraum in der Überwurfkapsel sitzt. Auch hier ist die Verbindungskraft, die das Deckelteil mit der Überwurfkapsel in dem mit X''' bezeichneten Bereich gewährleistet, größer als die Kraft, die notwendig ist, um den mittleren Scheibenteil 135, der durch die Kerbe 134 begrenzt ist, zu brechen. Dadurch bleiben beim Entfernen des Deckelteiles und des Scheibenteiles 135 diese gegenseitig befestigt und es bildet sich eine mittlere Öffnung in der Überwurfkapsel. In diesem Beispiel durchdringt die Kerbe 134 die Kunststoff-Schicht 123 und den oberen Teil 120 der Überwurfkapsel; mittels einer subkutanen Spritze kann man dann an den Inhalt des Behälters gelangen. Durch das Führungsteil 130 und den eingezogenen Bereich 124 des Scheibenteiles 135 richten sich die Teile für den Verbindungsprozeß genau aus.

Es ist zu beachten, daß das Deckelteil und die Überwurfkapsel der Anwendungsbeispiele in den Figuren 10 bis 13 im allgemeinen auf die Art und Weise zusammengebaut und zur Bildung einer vollständigen Einheit verbunden werden können, wie in Verbindung mit dem Hauptanwendungsbeispiel beschrieben und wie in den Abbildungen 14 bis 17 schematisch dargestellt.

Selbst wenn die bevorzugten Anwendungsbeispiele von Verschlüssen entsprechend der vorliegenden Erfindung eine Metallkapsel aus einfach verformbarem Aluminium mit einer Kunststoff-Beschichtung z. B. aus Polypropoylen vorsieht, kann die Kapsel auch aus anderem Material hergestellt sein wie z. B. verschiedene Ausführungen von Kunststoff-Material, das durch Ultraschall oder andere Mittel mit dem Deckelteil in der vorbeschriebenen Art und Weise verbunden werden kann, um die gewünschte, abgegrenzte Verbindung des Deckelteiles und der Kapsel zu erzielen.

Alle in der Beschreibung, den Ansprüchen und der Zeichnung dargestellten Merkmale können sowohl einzeln als auch in beliebiger Kombination erfindungswesentlich sein.

- Ansprüche -

PATENTANWÄLTE

DIPL.-ING. H. SCHMITT
DIPL.-ING. W. MAUCHER
16

78 FREIBURG I. BR. - 2. März 1984
DREIKÖNIGSTR.
TELEFON: (07 61) 0120353
70774

Firma
Pharma-Metall GmbH
Eifelstraße 63
5190 Stolberg

UNSERE AKTE - BITTE STETS ANGEBEN!

E 84 178 S

Ansprüche

1. Verschluß für einen Behälter, insbesondere für pharmazeutische Flaschen od. dgl., wobei der Behälter eine Öffnung insbesondere mit einer seitlichen Randwulst sowie einen Stopfen od. dgl. mit auf der Öffnung aufliegendem Flansch zum Verschließen der Behälteröffnung aufweist und mit einer den Stopfen od. dgl. zumindest bereichsweise umschließenden, becherartigen Überwurfkapsel, d a d u r c h g e k e n n z e i c h n e t , daß ein Teil der Überwurfkapsel (29, 62, 80, 102, 122) von dieser trennbar ausgebildet ist und daß ein Deckelteil (42, 66, 97, 128) od. dgl. mit dem abtrennbaren Teil (34, 135) der Überwurfkapsel verbunden und mit diesem entfernbar ist.

2. Verschluß nach Anspruch 1, dadurch gekennzeichnet, daß zur Verbindung des abtrennbaren Kapselteiles (34, 135) und des Deckelteiles (42, 128) eine Zwischenschicht (45) zumindest im Verbindungsbereich vorgesehen ist, die vorzugsweise aus Polypropylen od. dgl. verbundfähigem Material besteht, und eine

/17

Dicke zwischen etwa 0,1 mm bis 1 mm hat.

3. Verschluß nach Anspruch 1 oder 2, dadurch gekennzeichnet, daß die Überwurfkapsel (29, 62, 80, 102, 122) vorzugsweise aus Metall, insbesondere Aluminiumblech besteht und zumindest im Bereich ihres abtrennbaren Teiles eine Außenbeschichtung (45) aus Kunststoff od. dgl. zum Verbinden mit dem Deckelteil (42, 128 usw.) aufweist.

4. Verschluß nach einem der Ansprüche 1 bis 3, dadurch gekennzeichnet, daß das Deckelteil (42 usw.) aus Kunststoff besteht.

5. Verschluß nach einem der Ansprüche 1 bis 4, dadurch gekennzeichnet, daß die Kapsel (29) einen mittleren, vorspringenden Scheibenteil (34) aufweist, der durch eine Einkerbung (39) mit einem äußeren, ringförmigen Abschnitt des Oberteiles verbunden ist und daß das Deckelteil (42) einen vorstehenden Flansch (50) hat, der eine Tasche bildet, die dem schalenförmigen Scheibenteil (34) der Überwurfkapsel etwa entspricht und innerhalb des von einer Einkerbung (39) bestimmten Bereiches damit verbunden ist.

6. Verschluß nach einem der Ansprüche 1 bis 5, dadurch gekennzeicbent, daß der Außenbereich des Deckelteiles der Form der Kapsel angepaßt ist.

7. Verschluß nach einem der vorstehenden Ansprüche, dadurch gekennzeichnet, daß die Kapsel eine mittlere Öffnung (64) hat und daß das Deckelteil (66) einen sich über den Umfang erstreckenden, zur Kapsel vorstehenden Flansch (68) hat, der an seiner stirnseitigen Randfläche mit verbundfähigem Material, angrenzend an die Öffnung dieser Kapsel verbunden ist.

8. Verschluß nach einem der vorstehenden Ansprüche, dadurch gekennzeichnet, daß das Deckelteil einen in der Mitte davon befindlichen, abgestuften Vorsprung (92) hat, daß der mittlere Teil des Vorsprunges durch eine Öffnung (82) der Kapsel (80) eingreift und die radiale äußere Stufe einen Ansatz (94) bildet, der an der Schicht des verbundfähigen Materiales anliegt und damit verbunden ist und die Öffnung (82) in der Kapsel umgibt, und daß die Verbindungszone innerhalb einer umlaufenden Einkerbung liegt.

9. Verschluß nach einem der Ansprüche 1 bis 8, dadurch gekennzeichnet, daß das Oberteil der Kapsel mit einer umlaufenden, einen abnehmbaren Scheibenteil umgrenzenden Einkerbung versehen ist, und daß das Deckelteil einen vorstehenden Vorsprung (112) hat, der mit dem Scheibenteil innerhalb der Grenze dieser Einkerbung verbunden ist.

10. Verschluß nach Anspruch 9, dadurch gekennzeichnet, daß der Vorsprung (112) abgestuft ist und in ein in dem Scheibenbereich der Kapsel gebildeten, schalenförmigen Tasche eingreift.

11. Verfahren zur Herstellung eines Verschlusses gemäß Anspruch 1 bis 10, bestehend aus einem Kapselteil in becherartiger Form mit einem Oberteil mit Außenmantel und einem abtrennbaren Scheibenteil, das durch Einkerbungen dazwischen umgrenzt ist und einer Schicht aus verbundfähigem Material auf der Außenseite der Kapsel und mit einem mit diesem abnehmbaren Scheibenteil verbundenen Deckelteil, wobei durch Abnehmen dieses Deckelteiles ein Abtrennen des Scheibenteiles erfolgt, dadurch gekennzeichnet, daß eine Lage eines verbundfähigen Materiales auf die Außenseite der Kapsel, insbesondere auf den abtrennbaren Scheibenteil dieser Kapsel aufgebracht wird, daß dann ein Deckelteil auf den mit verbundfähigem Material versehenen Teil des Scheibenabschnittes der Kapsel aufgelegt und anschließend das Deckelteil und das Scheibenteil miteinander verbunden werden.

12. Verfahren nach Anspruch 11, dadurch gekennzeichnet, daß die Verbindung durch Hitzeeinwirkung, gegebenenfalls unter Druckbelastung erfolgt.

13. Verfahren nach Anspruch 11 oder 12, dadurch gekennzeichnet, daß das Deckelteil mit der Überwurfkapsel durch Ultraschallerhitzen verbunden wird.

- Zusammenfassung -

1/6

0120353

Fig. 2

Fig. 1

Fig. 3

Fig.4

Fig.5

Fig.6

Fig. 7

Fig. 8

Fig. 9

4/6

0120353

Fig. 10

Fig. 11

Fig. 12

0120353

**Fig. 13**

133  X''''  126  128  123  124  135  120  122

**Fig. 14**

200  32  29  45  38

**Fig. 15**

202  204  204a  32  34  29  38  50  39  42  205

Fig. 16

Fig. 17